# EUROPEAN PATENT SPECIFICATION

(11) **EP 3 871 302 B1**
(45) Date of publication and mention of the grant of the patent: **06.05.2026**
(21) Application number: 18795510.9
(22) Date of filing: 26.10.2018
(51) Int. Cl.: H02B 13/025, H02B 1/20

(54) **SWITCHGEAR COMPRISING A PASSIVE ARC PROTECTION**
SCHALTANLAGE MIT PASSIVEM STÖRLICHTBOGENSCHUTZ
APPAREILLAGE DE COMMUTATION AVEC PROTECTION PASSIVE CONTRE LES ARCS INTERNES

(43) Date of publication of application: 01.09.2021
(73) Proprietor: ABB Schweiz AG, 5400 Baden (CH)
(72) Inventor: BAYER, Bardo, 67582 Mettenheim (DE); MANJUNATHA, Aravind Ponnathapura, 68549 Ilvesheim (DE)
(74) Representative: Zimmermann & Partner Patentanwälte mbB
(86) International application number: PCT/EP2018/079415
(87) International publication number: WO 2020/083505

(56) References cited:
- WO-A2-2004/057718
- DE-B- 1 191 458
- DE-U- 7 232 011
- US-A- 5 705 773
- US-A1- 2011 149 482
- US-A1- 2017 054 278

## Description

The invention is related to a switchgear according to the preamble of claim 1.

WO 2004/057 718 A2 discloses a device comprising an insulation plate consisting of a glass mat base laminate or a "hard mat". DE 1 191 458 B teaches to arrange a bare horn for an electric arc on a bus bar. US 2011/0149482 A1 teaches to connect a red glass insulator with an arc attractor. US 2017/0054278 A1 teaches to provide ground fault frame bodies in a horizontal direction in plural numbers. US 5,705,773 A shows a tee boot 1 which is in a "T" configuration and is arranged around a bare joint area formed by bus bars and a riser. DE 72 32 011 U teaches to use a plate based on sodium silicate containing water which is arranged in sandwich manner between two plates of metal or is attached on one side of a metal plate.

A potential risk of failure exists for a bare bus bar system during internal arc fault tests, especially at 400 V and 100 kA and at 690 V and 65 kA. Internal arc faults in switchgears are usually avoided either by insulations or managed by either providing dedicated arc-escape routes, e.g. pressure relief flaps.

Additionally or as an alternative the switchgear can be made mechanically and thermally robust to withstand an arc. The insulating components are usually rigid or solid. This makes it difficult, to install them in tight spaces, which are usually present in compact switchgears.

The currently existing assemblies or procedures make use of solid parts and/or moulded insulating parts. They provoke difficulties as follows: mounting of the parts in the available space, challenges to use the parts or components at the required area or surface, which needs to be protected, expensive requirements for molds, no readily available off-the-shelf components etc.

Further, one of the existing methods of construction is to completely insulate bus bar systems, which are classified as arc-ignition protected zones. In other current assemblies active arc fault protections are used.

By using current constructions, there is a high probability of the arc finding metal parts of the frame or enclosure, hence burning and causing damage.

The internal arc usually runs along a main bus bar in the direction of energy flow and usually burns at the ends of the bus bar. The insulating angle, which covers the final few millimeters of the bus bar is providing a semi-enclosed area for the arc to burn. The partitions within the insulating angle are helping in arc-elongation.

However, with higher rating of the arc faults, namely higher kA ratings, the arc has a tendency to jump from the dedicated arc-burning region to the neighboring frames, enclosures and to burn causing holes, which could endanger the switchgear safety.

Additionally, in spite of the insulating angle, there could be radiative heat effects on the enclosures and on the adjacent regions.

The object of the invention therefore is to control and localize arc damages and to create a switchgear, which provides arc-fault containment.

The object of the invention is achieved by means of the features of claim 1.

According to this claim in the switchgear an arc attractor and at least a flexible insulation are arranged.

According to the invention it has been found, that present constructions or arrangements of swichgears do not use any dedicated arc attraction mechanism, neither is there any flexible protection mechanism for the metal and cladding.

According to the invention it further has been found that an arc attractor, preferably a sacrificial electrode, along with flexible insulation material either individually or in conjunction with solid insulation materials can be utilized to increase the arc quenching as well as the thermal withstand capability of the switchgear, thus making it arc-resistant.

According to the invention a dedicated arc attractor provides a dedicated arc-burning location. The protection can be increased by means of a flexible insulation.

The main concept of the invention is to provide a dedicated and safe arc-burning zone together with an arc attracting mechanism, and a flexible protection mechanism. A switchgear, in which this concept is realized, is safer than those of the state of the art, because a damage due to an arc is contained and localized. The arc is guided into dedicated locations for localized burning. The arc attractor also leads to a continuous arc-fault current, which results in a more consistent current value and in cases of presence of an up stream protection, helps in current detection and tripping.

The arc attractor is an electrode and/ or is a sacrificial electrode. A sacrificial electrode can be made of cost-efficient materials. The switchgear has potential to be cheaper than switchgears of the state of the art.

Further, advantageously, the arc attractor is embodied as a sacrificial metallic structure and/ or is a sacrificial metal structure. Such a structure may be positioned in such a way that it provides a safe region for the burning of the arc. The damage caused by the arc is minimized. The safety of the switchgear is increased.

Advantageously the arc attractor is in the form of metal strips or metal bars. Such an arc attractor can be made of metal strips or metal bars and therefore can easily be manufactured.

The normally exposed frames and enclosures are most vulnerable parts, which can be damaged due to the arc, thus compromising on the switchgear and operator safety.

The flexible insulation is a protective layer. Materials for the flexible insulation may have suitable properties to be applied into existing assemblies to protect the most vulnerable parts of the assembly, destruction of which could compromise on safety aspects of the switchgear. Metallic frames or regions of them can be protected by the flexible insulation.

Further, the flexible insulation is not a rigid insulating material. Preferably, the flexible insulation is an elastomer or comprises an elastomer. With the flexible insulation, sufficient protection is provided for the materials of the enclosure or the frame. The dedicated flexible insulating material with required properties is convenient to be installed in tight spaces, in which typically solid insulating materials cannot be used. The flexibility also helps to realize an effective installation as a first line of protection on the frames and enclosures without the already existing solid insulating angles.

Preferably, the bus bars are not completely insulated and/ or solid insulating angles are not provided, but flexible insulations are arranged.

A passive protection mechanism for arc fault protection in switchgears is presented by this invention. The passive protection mechanism uses a combination of flexible insulation and an attraction electrode for arc fault protection in switchgears.

This invention is used most preferably in industrial installations such as switchgears, low or medium voltage switchboards.

In the drawings:
- Fig. 1: schematically shows on the left side a side view of a bus bar assembly in a switchgear, for a particular arrangement, and on the right side a back view of the bus bar assembly, for a particular arrangement, wherein the curved lines show the arc-burning on copper and the dashed arrows show the potential burning regions of the arc on neighboring frame and enclosure material,
- Fig. 2: shows a three dimensional front view of a busbar assembly and
- Fig. 3: shows a three dimensional rear view of the assembly of Fig. 2.

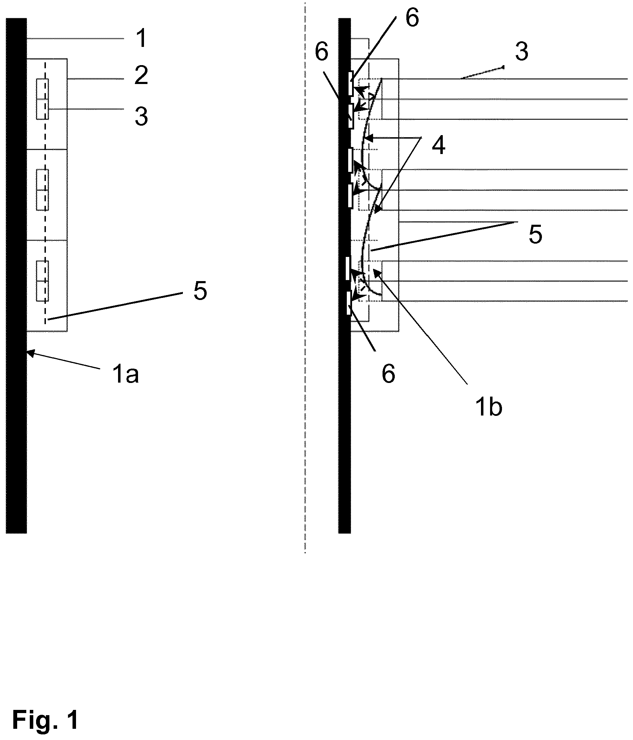

Fig. 1 on the left side schematically illustrates an assembly of a switchgear, in particular a low voltage or medium voltage switchgear, comprising a frame 1, an insulating angle 2, which may be solid or solid and flexible, and several bus bars 3 to transmit electrical current. The bus bars 3 are made of copper, aluminum or made of another metal.

The insulating angle 2 has the potential to be removed and to be replaced by other kinds of insulating materials. The bus bars 3 are aligned above each other and are oriented in parallel way.

The frame 1 comprises at least one unprotected surface 1a or area, where flexible insulations 6 may be arranged, to protect it. On the right side of Fig. 1 there is shown an internal electric arc 4 occurring in a possible region 1b of the frame 1.

The switchgear comprises at least a frame 1 and at least a bus bar 3 to transmit electrical current, wherein an arc attractor and at least a flexible insulation 6 are arranged.

The arc attractor is an electrode 5, namely a sacrificial electrode. In the example shown, six flexible insulations 6 are arranged to protect a previous unprotected surface 1a of the frame 1 from the arc 4.

In the region 1b an attraction to the electrode 5 occurs. This causes heat effects to an enclosure or the frame 1. Flexible insulations 6 therefore are used at the frame 1 or enclosure to protect it.

The electrode 5 or the arc attractor is also arranged. This electrode 5 is a protective cathode. The dashed arrows on the right side of Fig. 1 show the possible areas of arc spreading. An arc spreading in all dimensions may be possible.

In the illustrated embodiment according to Fig. 1, the additional electrode 5 is in the form of metal strips or metal bars or of a sort of a metallic structure, like a metal fin structure. This electrode 5 is provided as means of an attraction for the arc 4.

Fig. 1 shows the electrode 5 placed within a dedicated insulating angle 2. The position of the electrode 5 itself may be made flexible and can be changed into another position than the one illustrated in Fig. 1.

The selection of the position of the electrode 5 is made based on the potential of the arc-voltage and the smallest distance required for the arc 4 to make a suitable bridge to the grounded electrode 5.

Based on an analysis of material properties of the flexible insulation material, it is possible to replace the insulating angle 2 by a flexible insulating material of similar properties, which additionally has advantages of encompassing a bigger area and easier installation.

The arc attracting mechanism by virtue of its position and structure is providing a safe region 1b for the burning of the arc. With a flexible insulation 6, a protective layer is provided for the frame 1 and enclosure materials, potentially without the solid insulating angles 2.

The flexibility of the flexible insulation 6 also helps to effectively install it either as a first line of protection on the frame 1 or enclosure or as an additional line potentially without the requirement of any solid insulating angle 2.

In Fig. 1, in an example not covered by the wording of the claims, the flexible insulation 6 is attached to the frame 1 of the switchgear. According to embodiments, the flexible insulation 6 is a protective layer and is not a rigid insulating material.

The flexible insulation 6 is an elastomer. The longitudinal ends of the bus bars 3 are nearby the flexible insulations 6.

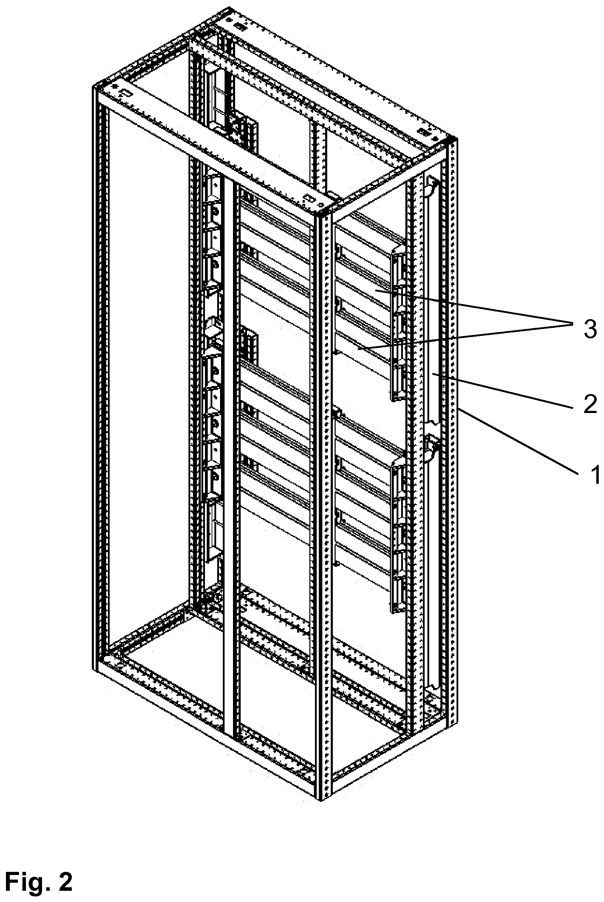

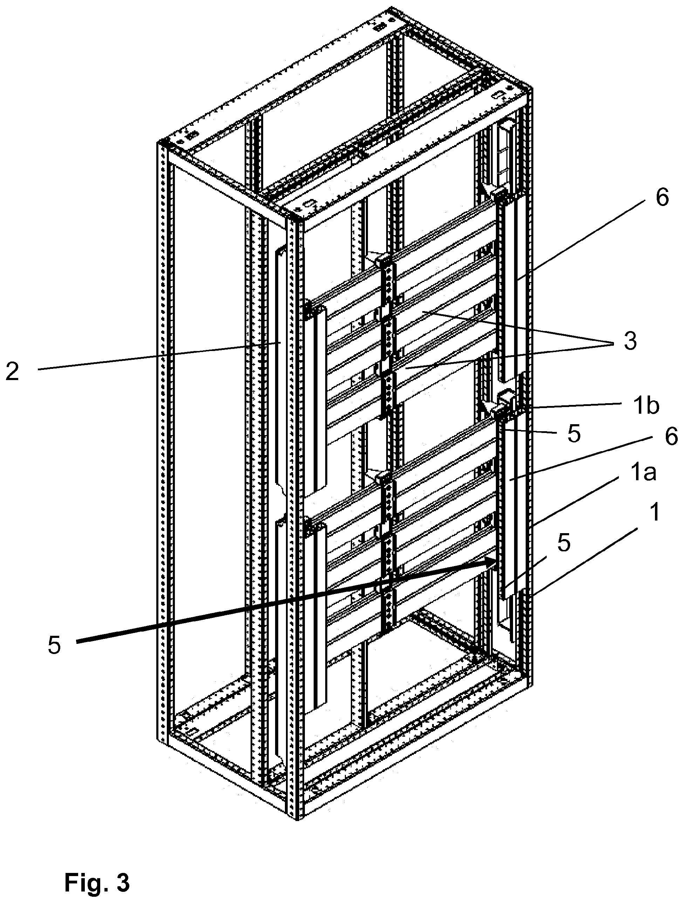

Fig. 2 and 3 show a perspective front view and rear view respectively of a switchgear, in particular a low voltage or medium voltage switchgear, comprising a frame 1, an insulating angle 2, which may be solid or solid and flexible, and several bus bars 3 to transmit electrical current. The bus bars 3 are made of copper, aluminum or made of another metal.

The insulating angle 2 has the potential to be removed and to be replaced by other kinds of insulating materials. The bus bars 3 are aligned above each other and are oriented in a parallel way.

The frame 1 comprises at least one unprotected surface 1a or area, where flexible insulations 6 are arranged, to protect it. The switchgear comprises at least a frame 1 and at least a bus bar 3 to transmit electrical current, wherein an arc attractor and at least a flexible insulation 6 are arranged.

The arc attractor is an electrode 5, namely a sacrificial electrode. In the example shown, four flexible insulations 6 are arranged to protect a previous unprotected surface 1a of the frame 1 from the arc.

In the region 1b an attraction to the electrode 5 occurs. This causes heat effects to an enclosure or the frame 1. Flexible insulations 6 therefore are used at the frame 1 or enclosure to protect it.

The electrode 5 or the arc attractor is also arranged. This electrode 5 is a protective cathode.

In the illustrated embodiment according to Fig. 2 and 3, the additional electrode 5 is in the form of a metal strip or metal bar. This electrode 5 is provided as means of an attraction for the arc.

Fig. 3 shows the electrode 5 placed within a flexible insulation 6. The flexible insulation 6 is attached on a rear side of the arc attractor, namely the electrode 5. The front side of the electrode 5 is bare. The position of the electrode 5 itself may be made flexible and can be changed into another position than the one illustrated in Fig. 3.

The flexible insulation 6 is an elastomer. The longitudinal ends of the bus bars 3 are nearby the flexible insulations 6.

### Reference numbers

| | |
|---|---|
| 1 | Frame |
| 1a | Unprotected surface or area of 1 |
| 1b | Region of 1 |
| 2 | Insulating angle |
| 3 | Bus bar |
| 4 | Arc |
| 5 | Electrode, Arc attractor |
| 6 | Flexible insulation |

## Claims

1. Switchgear, comprising a frame (1) and at least a bus bar (3) to transmit electrical current, wherein an arc attractor is arranged and wherein the arc attractor is an electrode (5) and/ or is a sacrificial electrode,
**characterized in that** at least a flexible insulation (6) is arranged, which is not a rigid insulating material, wherein the flexible insulation (6) is a protective layer, configured to protect the frame (1) against heat effects of an arc attracted to the arc attractor or from the arc, wherein the flexible insulation (6) is attached on a rear side of the arc attractor or wherein the flexible insulation (6) is a wrapping on top of the arc attractor.

2. Switchgear according to claim 1, **characterized in that** the flexible insulation (6) is an elastomer or comprises an elastomer.

3. Switchgear according to claim 1 or 2, **characterized in that** the arc attractor is embodied as a metallic structure and/ or is a metal fin structure.

4. Switchgear according to one of the preceding claims, **characterized in that** the arc attractor is in the form of metal strips or metal bars.

5. Switchgear according to one of the preceding claims, **characterized in that** the switchgear is a low voltage or medium voltage switchgear.

## Patentansprüche

1. Schaltanlage, umfassend einen Rahmen (1) und mindestens eine Sammelschiene (3) zum Übertragen von elektrischem Strom, wobei ein Lichtbogen-Attraktor angeordnet ist und wobei der Lichtbogen-Attraktor eine Elektrode (5) ist und/oder eine Opferelektrode ist, **dadurch gekennzeichnet, dass** mindestens eine flexible Isolierung (6) angeordnet ist, die kein starres Isoliermaterial ist, wobei die flexible Isolierung (6) eine Schutzschicht ist, die dazu ausgelegt ist, den Rahmen (1) vor Wärmeeinwirkungen eines Lichtbogens, der zum Lichtbogen-Attraktor angezogen wird, oder von dem Lichtbogen zu schützen, wobei die flexible Isolierung (6) an einer Rückseite des Lichtbogen-Attraktor s angebracht ist oder wobei die flexible Isolierung (6) eine Umhüllung auf dem Lichtbogen-Attraktor ist.

2. Schaltanlage nach Anspruch 1, **dadurch gekennzeichnet, dass** die flexible Isolierung (6) ein Elastomer ist oder ein Elastomer umfasst.

3. Schaltanlage nach Anspruch 1 oder 2, **dadurch gekennzeichnet, dass** der Lichtbogen-Attraktor als metallische Struktur und/oder als metallische Finnenstruktur realisiert ist.

4. Schaltanlage nach einem der vorhergehenden Ansprüche, **dadurch gekennzeichnet, dass** der Lichtbogen-Attraktor die Form von Metallbändern oder Metallstäben aufweist.

5. Schaltanlage nach einem der vorhergehenden Ansprüche, **dadurch gekennzeichnet, dass** die Schaltanlage eine Niederspannungs- oder Mittelspannungsschaltanlage ist.

## Revendications

1. Appareillage de commutation, comprenant un châssis (1) et au moins une barre de distribution (3) pour transmettre un courant électrique, dans lequel un dispositif d'attraction d'arc est prévu et dans lequel le dispositif d'attraction d'arc est une électrode (5) et/ou est une électrode sacrificielle,
**caractérisé en ce qu'**au moins une isolation souple (6) est prévue, laquelle n'est pas un matériau isolant rigide, dans lequel l'isolation souple (6) est une couche protectrice, conçue pour protéger le châssis (1) contre les effets thermiques d'un arc attiré vers le dispositif d'attraction d'arc ou induits par l'arc, dans lequel l'isolation souple (6) est fixée sur un côté arrière du dispositif d'attraction d'arc ou l'isolation souple (6) est une enveloppe au-dessus du dispositif d'attraction d'arc.

2. Appareillage de commutation selon la revendication 1, **caractérisé en ce que** l'isolation souple (6) est un élastomère ou comprend un élastomère.

3. Appareillage de commutation selon la revendication 1 ou 2, **caractérisé en ce que** le dispositif d'attraction d'arc est conçu sous la forme d'une structure métallique et/ou est une structure d'ailette métallique.

4. Appareillage de commutation selon une des revendications précédentes, **caractérisé en ce que** le dispositif d'attraction d'arc se présente sous la forme de bandes métalliques ou de barres métalliques.

5. Appareillage de commutation selon une des revendications précédentes, **caractérisé en ce que** l'appareillage de commutation est un appareillage de commutation basse tension ou moyenne tension.
